# EUROPÄISCHE PATENTSCHRIFT

(11) **EP 2 092 216 B1**
(45) Veröffentlichungstag und Bekanntmachung des Hinweises auf die Patenterteilung: **12.01.2011**
(21) Anmeldenummer: 07821419.4
(22) Anmeldetag: 17.10.2007
(51) Int. Cl.: F16H 57/02, F16J 15/02, B60S 1/16

(54) **GETRIEBEGEHÄUSE**
GEAR HOUSING
BOÎTIER DE TRANSMISSION

(30) Priorität: 15.12.2006 DE 102006059347
(43) Veröffentlichungstag der Anmeldung: 26.08.2009
(73) Patentinhaber: Robert Bosch GmbH, 70442 Stuttgart (DE)
(72) Erfinder: HURST, Richard, 77652 Offenburg (DE); SAUER, Christian, 77746 Schutterwald (DE); HEYDER, Martin, 77833 Ottersweier (DE)
(86) Internationale Anmeldenummer: PCT/EP2007/061054
(87) Internationale Veröffentlichungsnummer: WO 2008/071486

(56) Entgegenhaltungen:
- EP-A- 1 126 196
- DE-A1- 19 736 431
- DE-U1- 20 314 884
- US-A1- 2003 107 185

## Beschreibung

### Stand der Technik

Die Erfindung betrifft ein Getriebegehäuse mit einem Getriebe gemäß dem Oberbegriff des Anspruchs 1.

Getriebegehäuse, insbesondere mit einem innenliegenden Schneckengetriebe, mit einem an das Getriebegehäuse angeflanschten elektrischer Antriebsmotor als Bestandteil von Wischvorrichtungen für Kraftfahrzeuge sind in vielfältigen Bauformen bekannt.

Die bekannten Getriebegehäuse umfassen in der Regel zwei Halbschalen, nämlich einen Gehäusegrundkörper und einen an dem Gehäusegrundkörper festgelegten Gehäusedeckel, wobei zwischen Gehäusedeckel und Gehäusegrundkörper eine Ringdichtung vorgesehen ist, um den Eintritt von Feuchtigkeit in das Getriebegehäuse hinein zu vermeiden. Zur Festlegung des Gehäusedeckels an dem Gehäusegrundkörper ist es bekannt Schrauben oder Nieten vorzusehen, wobei in diesem Fall die zwischen Gehäusedeckel und Gehäusegrundkörper angeordnete Ringdichtung als Flachdichtung ausgebildet ist. Diese Befestigungsart ist umständlich und benötigt eine Vielzahl von Montageschritten zur Anbringung der Schrauben oder Nieten. Ferner ist es bekannt, einen aus Kunststoff ausgebildeten Gehäusedeckel mit integrierten Kunststoffclipslaschen an dem Gehäusegrundkörper festzulegen, wobei die Kunststoffclipslaschen in entsprechende Rastnasen des Getriebegehäuses eingreifen. Bei den hierbei eingesetzten Ringdichtungen handelt es sich um Profildichtungen mit einer in Richtung Gehäusegrundkörper weisenden Dichtkante. Nachteilig hierbei ist die Bruchanfälligkeit der zum Einsatz kommenden Kunststoffclipse und die nur aufwendig zu fertigende Profildichtung. Ferner ist es bekannt Kunststoffclipse in Verbindung mit einer Dichtung einzusetzen, die eine größere Radialerstreckung hat als der Auflagebereich für die Ringdichtung am Gehäusegrundkörper. Bei dieser Ausführungsform ist vorteilhaft, dass günstig herstellbare Ringdichtungen ohne Dichtkante einsetzbar sind - nachteilig ist jedoch, dass die Kunststoffclipse beschädigungsanfällig sind und nicht immer eine ausreichende Dichtungspressung gewährleisten. Weiterhin ist der Einsatz von Halteklammern aus Federstahl bekannt, wobei diese lediglich in Kombination mit aufwendig zu fertigenden Profildichtungen mit Dichtkante zum Einsatz kommen. Bei dieser Befestigungsart ist die Radialerstreckung des Auflagebereichs am Gehäusegrundkörper für die Dichtung größer als die Radialerstreckung der Ringdichtung. Hierdurch muss der Gehäusegrundkörper, zumindest im Anlagebereich, eine aus Stabilitätsgründen eigentlich nicht notwendig große Radialerstreckung aufweisen, was den Materialeinsatz und damit die Herstellungskosten erheblich erhöht.

Die gattungsbildende EP 1 126 196 A1 beschreibt ein Gehäuse für ein Fahrzeugschaltgetriebe, das einen Aufnahmebereich für ein Rückwärtsgang-Zwischenrad aufweist. Eine Verschlusskappe für den Gehäusebereich zur Aufnahme des Zwischenrades ist an diesem Bereich abnehmbar durch eine Klammer befestigt, deren Enden in zwei entsprechenden Blindlöchern des Gehäusebereichs in Eingriff kommen. Die Verschlusskappe kann dabei über eine Dichtung an dem Gehäusebereich befestigt sein, die auf dem Außenumfangsrand der Öffnung der Aufnahme des Zwischenrades anliegt. Dabei ragt das Zwischenrad teilweise durch die Öffnung in die Verschlusskappe.

### Offenbarung der Erfindung

### Technische Aufgabe

Der Erfindung liegt daher die Aufgabe zugrunde, ein Getriebegehäuse vorzuschlagen, das kostengünstig herstellbar ist und bei dem mit wenig beschädigungsanfälligen Befestigungsmitteln eine feste Verbindung zwischen Gehäusegrundkörper und Gehäusedeckel gewährleistet ist.

### Technische Lösung

Diese Aufgabe wird mit den Merkmalen des Anspruchs 1 gelöst.

Vorteilhafte Weiterbildungen der Erfindung sind in den Unteransprüchen angegeben.

Der Erfindung liegt der Gedanke zugrunde, über den Umfang des Getriebegehäuses beabstandete, federelastische Halteklammern aus Federstahl mit einem im Verhältnis zur Dichtungsbreite schmalen Auflagebereich am Gehäusegrundkörper zu kombinieren. Das Vorsehen von insbesondere als separate Bauteile ausgebildeten Halteklammern aus Federstahl (Stahlclipse, Haltefedern) sorgt für eine feste Verbindung zwischen Gehäusegrundkörper und Gehäusedeckel. Ferner sind Halteklammern aus Federstahl im Gegensatz zu Kunststoffclipsen nicht bruchgefährdet, was auch die Montage vereinfacht bzw. erleichtert, da die Halteklammern nicht vorsichtig gehandhabt werden müssen und nicht auf eine mögliche Beschädigung der Halteklammern bei der Monatage geachtet werden muss. Ferner können etwaige Fertigungstoleranzen durch die Federwirkung der Halteklammern aus Federstahl ausgeglichen werden. Der schmale Auflagebereich, das heißt ein Auflagebereich mit geringer Radialerstreckung, hat den Vorteil, dass das Gehäusegrundkörpermaterial, insbesondere Aluminium, Aluminiumlegierungen oder Kunststoffe eingespart werden können, da sich der Auflagebereich nicht über die gesamte Radialerstreckung der Dichtung erstrecken muss.

Aufgrund der Materialeinsparung kann der Gehäusegrundkörper und damit das Getriebegehäuse bei ausreichender Stabilität kostengünstig hergestellt werden. Im montierten Zustand hat die Dichtung aufgrund der Dichtungspressung eine größere Radialerstreckung als im nicht montierten Zustand. Bevorzugt ist eine Ausführungsform, bei der die Radialerstreckung des Auflagebereichs sogar kleiner ist, als die Radialerstreckung der Dichtung im nicht montierten Zustand.

In Weiterbildung der Erfindung ist mit Vorteil vorgesehen, dass der Auflagebereich des Gehäusegrundkörpers von einer ebenen Umfangskantenstirnfläche des Gehäusegrundkörpers gebildet ist. Dabei erstreckt sich der Auflagebereich bevorzugt quer zur Montagerichtung des Gehäusedeckels auf den Gehäusegrundkörper. Hierdurch erfolgt eine gleichmäßige Dichtungspressung über die gesamte Radialerstreckung des Auflagebereichs.

Bevorzugt weist die dem Gehäusegrundkörper zugewandte Ringdichtungsseite keine Dichtkante auf, sondern ist vielmehr eben ausgebildet. Vorzugsweise ist die dem Gehäusegrundkörper zugewandte Ringdichtungsseite dabei unmittelbar vor deren montagebedingter Verformung parallel zu dem Auflagebereich ausgerichtet. Die Ringdichtung ist bevorzugt derart auszubilden und zu pressen, dass diese den Auflagebereich in Montagerichtung des Gehäusedeckels auf dem Gehäusegrundkörper, also in Pressrichtung überlappt. Die Ringdichtung erstreckt sich also auf beiden Seiten des Auflagebereichs ein Stück weit in axialer Richtung. Anders ausgedrückt gräbt sich der Auflagebereich in axialer Richtung in die Ringdichtung ein, wodurch eine optimale Dichtwirkung erzielt wird.

Die flache Ausbildung der dem Gehäusegrundkörper zugewandten Ringdichtungsseite ermöglicht die Fertigung der Ringdichtung als kostengünstiges Strangpressprofil mit bevorzugt rechteckiger Querschnittsfläche. Es ist jedoch auch denkbar, die Ringdichtung an den fertigen Gehäusedeckel anzuspritzen.

Bevorzugt ist eine Ausführungsform, bei der die, insbesondere als Strangpressprofil ausgebildete Ringdichtung in einer in Richtung des Gehäusegrundkörpers offenen Aufnahmenut aufgenommen ist. Bevorzugt ist die Nut im Bereich des Nutgrundes als eckiges U-Profil ausgebildet und damit formkongruent zur Ringdichtung. Mit Vorteil verbreitert sich die Aufnahmenut, insbesondere konisch, in Richtung des Gehäusegrundkörpers, um eine seitliche, definierte Dichtungspressung beim axialen Eindringen des Auflagebereichs in die Ringdichtung hinein zu ermöglichen.

Durch das Vorsehen mindestens eines Anschlags am Gehäusegrundkörper auf dem der Gehäusedeckel, insbesondere mit einer sich in axialer Richtung erstreckenden Stütznase aufliegt kann eine definierte Pressung der Ringdichtung, im Wesentlichen unabhängig von der Größe der Federkraft der Haltefedern aus Federstahl, erreicht werden. Die Haltefedern müssen lediglich so dimensioniert sein, dass eine Anlage des Gehäusedeckels auf dem mindestens einen Anschlag zu jeder Zeit gewährleistet ist.

Bevorzugt ist eine Ausführungsform, bei der am Gehäuse nicht nur ein einziger Anschlag vorgesehen ist, sondern bei der jeder Halteklammer ein Anschlag zugeordnet ist, um in den Bereichen größter Kraftbeaufschlagung eine sichere Abstützung und damit definierte Ringdichtungspressung zu ermöglichen. Vorzugsweise ist jeweils ein Anschlag in einem Bereich radial zwischen einer Halteklammer und dem Auflagebereich angeordnet.

Um eine möglichst einfache Bauform des Gehäusedeckels realisieren zu können, wodurch die Werkzeugkosten weiter reduziert werden, ist eine Ausführungsform von Vorteil, bei der die Halteklammern derart ausgebildet sind, dass sie unmittelbar eine Druckkraft auf die Gehäusedeckeloberfläche in Richtung des Gehäusegrundkörpers ausüben. Bei einer derartigen Ausführungsform wird bevorzugt auf Rastvorsprünge am Deckel für die Halteklammern verzichtet.

Zur Festlegung der Halteklammern an dem Gehäusegrundkörper ist vorzugsweise jeder Halteklammer eine sich in radialer Richtung erstreckende Rastnase am Gehäusegrundkörper zugeordnet, wobei die Rastnasen zur erleichterten Montage der Halteklammern eine von dem Gehäusedeckel weg weisende Anlaufschräge aufweisen, über die die axial unteren Seiten der Halteklammern bei der Montage gleiten können, um dann jeweils mit einer Aufnahmeöffnung die Rastnase zu hintergreifen.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine perspektivische Darstellung eines montierten Getriebegehäuses mit innenliegendem Schneckenge- triebe und angeflanschtem Motorgehäuse,
- Fig. 2:: eine perspektivische Teilansicht eines Montage- schrittes des Getriebegehäuses,
- Fig. 3:: eine Teilansicht eines späteren Montageschrittes des Getriebegehäuses und
- Fig. 4:: eine Teilansicht des fertig montierten Getriebegehäuses.

### Ausführungsformen der Erfindung

In den Figuren sind gleiche Bauteile mit der gleichen Funktion mit den gleichen Bezugszeichen gekennzeichnet.

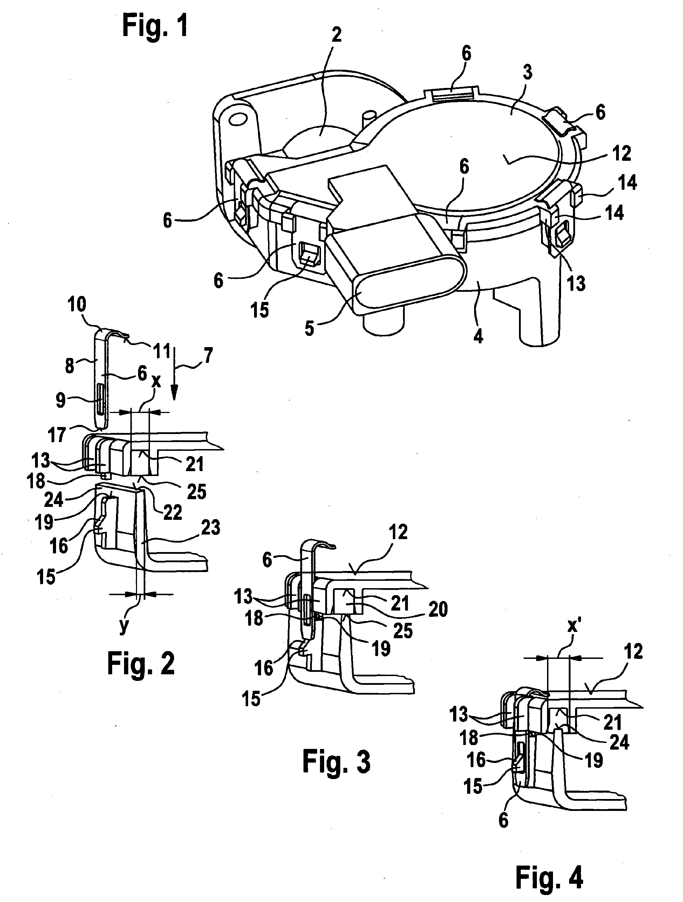

In Fig. 1 ist ein Getriebegehäuse 1 einer nicht dargestellten Wischvorrichtung für ein Kraftfahrzeug gezeigt. Das Getriebegehäuse 1 beinhaltet ein Schneckengetriebe, welches von einem nicht dargestellten, in einem an das Getriebegehäuse 1 angeflanschten Motorgehäuse 2 aufgenommen ist. Das gezeigte Getriebegehäuse 1 ist üblicherweise an einem ebenfalls nicht dargestellten, karosseriefesten Befestigungsrohr festgelegt.

Das Getriebegehäuse 1 umfasst einen in der Zeichnungsebene oberen Gehäusedeckel 3 aus Kunststoff und ein mit diesem verbundenen Gehäusegrundkörper 4 aus Aluminiumdruckguss. Am Gehäusedeckel 3 ist eine kodierte Anschlussbuchse 5 zur Aufnahme eines nicht gezeigten Steckverbinders, unter anderem zur Versorgung des im Motorgehäuse 2 angeordneten Antriebsmotor mit elektrischem Strom angeordnet.

Zur Festlegung des Gehäusedeckels 3 an dem Gehäusegrundkörper 4 sind mehrere in Umfangsrichtung beabstandete Halteklammern 6 aus Federstahl vorgesehen. Diese weisen jeweils einen sich im Wesentlichen in Montage- bzw. Pressrichtung 7 erstreckenden, zumindest näherungsweise flachen Axialabschnitt mit einer rechteckig konturierten Aufnahmeöffnung 9 auf. Der Axialabschnitt 8 geht in einem in der Zeichnungsebene oberen Bereich nach radial innen und axial nach unten gewölbten Halteabschnitt 10 über, der für eine Federwirkung in axialer Richtung verantwortlich ist. Mit jeweils einer Anlagekante 11 des Halteabschnitts 10 liegt jede Halteklammer 6 im montierten Zustand (vgl. Fig. 1 und Fig. 4) auf der Gehäusedeckeloberseite 12 auf. Auf Rastvorsprünge am Gehäusedeckel 3 wurde bewusst verzichtet.

Zur Führung der Halteklammern 6 bei der Montage und zur Sicherung der Montageposition sind jeder Halteklammer 6 zwei in Umfangsrichtung beabstandete, sich in radialer und axialer Richtung erstreckende Führungsvorsprünge 13 am Gehäusedeckel 3 zugeordnet (vgl. Fig. 2 bis 4). Bei dem Ausführungsbeispiel gemäß Fig. 1 sind die Führungsvorsprünge 13 Teil von Rückhaltelaschen 14, die die montierten Halteklammern 6 in Umfangsrichtung hintergreifen und somit ein unbeabsichtigtes Ablösen verhindern.

Im montierten Zustand hintergreifen die Halteklammern 6 mit ihren jeweiligen Aufnahmeöffnungen 9 jeweils eine sich von dem Gehäusegrundkörper 4 in radialer Richtung erstreckende Rastnase 15. Jede Rastnase 15 ist mit einer Anlaufschräge 15 versehen, an der entlang eine Unterseite 17 der zugehörigen Halteklammer 6 bei der Montage gleitet und dabei in einem oberen Bereich des Axialabsclinitts 8 von den Rückhaltelaschen zurückgehalten wird. Somit wird die Halteklammer 6 in einem unteren Bereich federnd ausgelenkt.

Wie besonders gut aus Fig. 4 ersichtlich ist, weist der Gehäusedeckel 3 in Montagerichtung 7 weisende Stütznasen 18 auf, mit denen der Gehäusedeckel 3 im montierten Zustand auf korrespondierenden Anschlägen 19 am Gehäusegrundkörper 4 aufliegt, um eine definierte Pressung einer Ringdichtung 20 zu gewährleisten, die in einer Aufnahmenut 21 im Gehäusedeckel 3 aufgenommen ist. Im nicht montierten Zustand weist die Ringdichtung, wie insbesondere aus den Fig. 2 und 3 ersichtlich ist, eine rechteckige Querschnittskontur auf, wobei die Ringdichtung 20 im nicht montierten Zustand eine Erstreckung x in radialer Richtung aufweist.

Die Aufnahmenut 21 ist in einem unteren Nutbereich formkongruent zur Ringdichtung 20 ausgebildet und verbreitert sich konisch in Richtung der Aufnahmenutöffnung. Von einer Umfangskantenstirnfläche 22 einer Umfangswand 23 des schalenförmigen Gehäusegrundkörpers 4 wird ein im Wesentlichen ebener, sich in radialer Richtung erstreckender Auflagebereich 24 mit einer Radialerstreckung y gebildet, wobei die Radialerstreckung y des Auflagebereichs 24 für die Ringdichtung 20 in etwa der Hälfte der Radialerstreckung x der Ringdichtung 20 im nicht montierten Zustand und etwa einem Drittel der Radialerstreckung x' der Ringdichtung 20 im montierten Zustand entspricht, so dass, wie sich insbesondere aus Fig. 4 ergibt, die Ringdichtung 20 den ebenen Auflagebereich 24 in Montagerichtung 7, das heißt in Pressrichtung überlappt, also sich in Montagerichtung 7 ein Stück weit entlang beider Seiten der Umfangswand 23 erstreckt, so dass der Auflagebereich 24 sich innerhalb des so gebildeten, gepressten Dichtungsprofils befindet. Die Umfangswand 23 bildet somit im Wesentlichen ein Aufnahmenutprofil in der Ringdichtung 20 für den Auflagebereich 24 aus. Dabei ist die im nicht montierten Zustand zu dem Auflagebereich 24 parallele, untere Seitenfläche 25 der Ringdichtung 20 im Wesentlichen etwa U-förmig nach innen gewölbt. Hierdurch verbreitert sich die Radialerstreckung der Ringdichtung 24 (vgl. Fig. 4), welche seitlich von dem sich erweiternden Abschnitt der Aufnahmenut definiert gepresst wird.

Bei der Montage wird wie folgt vorgegangen. Zunächst wird die Ringdichtung 20 in die Aufnahmenut 21 eingelegt und der Gehäusedeckel 3 in Montagerichtung 7 auf den Gehäusegrundkörper 4 aufgesetzt. Daraufhin werden die Halteklammern 6 durch Aufschieben in Montagerichtung 7 montiert. Bei dem Aufschieben der Halteklammern 6 wird deren jeweilige Unterseite 17 an der zugehörigen Anlaufschräge 19 radial nach außen gepresst. Die Rückhaltelaschen 14 verhindern ein Abgleiten der Halteklammern 6 in radialer Richtung und ermöglichen eine federnde Auslenkung des freien Endes der Halteklammer 6. Jede Halteklammer 6 schnappt dann radial nach innen, sobald der untere Bereich der Aufnahmeöffnung 9 in Montagerichtung 7 an der Rastnase 15 vorbeigeführt ist, so dass jede Halteklammer 6 die zugehörige Rastnase 15 hintergreift, während jede Halteklammer 6 mit ihrer jeweiligen Anlagekante 11 auf der Gehäusedeckeloberseite 12 aufliegt. Bei Bedarf können auf der Gehäusedeckeloberseite 12 Rastvorsprünge vorgesehen werden.

## Patentansprüche

1. Getriebegehäuse mit einem Getriebe, insbesondere mit einem Getriebe einer Wischvorrichtung für Kraftfahrzeuge, mit einem Gehäusegrundkörper (4), mit einem an dem Gehäusegrundkörper (4) mittels mehrerer in Umfangsrichtung beabstandeter Halteklammern (6) aus Federstahl festgelegten Gehäusedeckel (3) und mit einer zwischen Gehäusegrundkörper (4) und Gehäusedeckel (3) angeordneten, gegen einen Auflagebereich (24) des Gehäusegrundkörpers (4) gepressten Ringdichtung (20),
**dadurch gekennzeichnet,**
**dass** die Wandstärke (y) des Auflagebereichs (24) in radiale Richtung der Ringdichtung (20) geringer ist als die Ringbreite (x, x') der Ringdichtung (20).

2. Getriebegehäuse nach Anspruch 1, **dadurch gekennzeichnet, dass** der Auflagebereich (24) von einer ebenen Umfangskantenstirnfläche (22) des Gehäusegrundkörpers (4) gebildet ist.

3. Getriebegehäuse nach einem der Ansprüche 1 oder 2, **dadurch gekennzeichnet, dass** die dem Gehäusegrundkörper (4) zugewandte Ringdichtungsseitenfläche (25) im nicht verpressten Zustand eben ist.

4. Getriebegehäuse nach einem der vorhergehenden Ansprüche, **dadurch gekennzeichnet, dass** die Ringdichtung (20) im gepressten Zustand den Auflagebereich (24) in Montagerichtung (7) überlappt.

5. Getriebegehäuse nach einem der vorhergehenden Ansprüche, **dadurch gekennzeichnet, dass** die Ringdichtung (20) als Strangpressprofil, insbesondere mit einer rechteckigen Querschnittsfläche, ausgebildet ist.

6. Getriebegehäuse nach einem der vorhergehenden Ansprüche, **dadurch gekennzeichnet, dass** die Ringdichtung (20) in einer Aufnahmenut (21) des Gehäusedeckels (3) angeordnet ist.

7. Getriebegehäuse nach einem der vorhergehenden Ansprüche, **dadurch gekennzeichnet, dass** mindestens ein Anschlag (19) am Gehäusegrundkörper (4) zur Abstützung des Gehäusedeckels (3) vorgesehen ist.

8. Getriebegehäuse nach Anspruch 7, **dadurch gekennzeichnet, dass**. jeder Halteklammer (6) ein Anschlag (19) zugeordnet ist.

9. Getriebegehäuse nach einem der vorhergehenden Ansprüche, **dadurch gekennzeichnet, dass** die Halteklammern (6) eine Druckkraft auf die Gehäusedeckeloberseite (12) in Richtung Gehäusegrundkörper (4) ausübend ausgebildet und/oder angeordnet ist.

10. Getriebegehäuse nach einem der vorhergehenden Ansprüche, **dadurch gekennzeichnet, dass** die Halteklammern (6) mittels einer Aufnahmeöffnung (9) an sich von dem Gehäusegrundkörper (4) in radialer Richtung erstreckenden Rastnasen (15) mit einer in Montagerichtung (7) weisenden Anlaufschräge (16) gehalten sind.

## Claims

1. Gear housing with a gear mechanism, in particular with a gear mechanism of a wiper device for motor vehicles, with a housing base body (4), with a housing cover (3) fixed to the housing base body (4) by means of a plurality of spring steel retaining clips (6) spaced apart in the circumferential direction, and with an annular seal (20) which is arranged between the housing base body (4) and housing cover (3) and is pressed against a bearing region (24) of the housing base body (4), **characterized in that** the wall thickness (y) of the bearing region (24) in the radial direction of the annular seal (20) is smaller than the annular width (x, x') of the annular seal (20).

2. Gear housing according to Claim 1, **characterized in that** the bearing region (24) is formed by a planar circumferential-edge end surface (22) of the housing base body (4).

3. Gear housing according to either of Claims 1 and 2, **characterized in that** the annular-seal side surface (25) which faces the housing base body (4) is planar in the unpressed state.

4. Gear housing according to one of the preceding claims, **characterized in that**, in the pressed state, the annular seal (20) overlaps the bearing region (24) in the installation direction (7).

5. Gear housing according to one of the preceding claims, **characterized in that** the annular seal (20) is designed as an extruded profile, in particular having a rectangular cross-sectional area.

6. Gear housing according to one of the preceding claims, **characterized in that** the annular seal (20) is arranged in a receiving groove (21) of the housing cover (3).

7. Gear housing according to one of the preceding claims, **characterized in that** at least one stop (19) is provided on the housing base body (4) to support the housing cover (3).

8. Gear housing according to Claim 7, **characterized in that** each retaining clip (6) is assigned a stop (19).

9. Gear housing according to one of the preceding claims, **characterized in that** the retaining clips (6) are designed and/or arranged so as to exert a pressure force on the housing cover upper side (12) in the direction of the housing base body (4).

10. Gear housing according to one of the preceding claims, **characterized in that** the retaining clips (6) are retained by means of a receiving opening (9) on latching lugs (15) which extend in the redial direction from the housing base body (4) and have a run-on slope (16) pointing in the installation direction (7).

## Revendications

1. Boîtier de transmission comprenant une transmission, notamment une transmission pour un dispositif de lavage de véhicule automobile, comprenant un corps de base de boîtier (4), un couvercle de boîtier (3) fixé sur le corps de base de boîtier (4) au moyen de plusieurs pinces de retenue (6) en acier à ressort espacées dans la direction périphérique, et un joint d'étanchéité annulaire (20) disposé entre le corps de base de boîtier (4) et le couvercle de boîtier (3), pressé contre une région d'appui (24) du corps de base de boîtier (4),
**caractérisé en ce que**
l'épaisseur de paroi (y) de la région d'appui (24) dans la direction radiale du joint d'étanchéité annulaire (20) est inférieure à la largeur annulaire (x, x') du joint d'étanchéité annulaire (20).

2. Boîtier de transmission selon la revendication 1, **caractérisé en ce que** la région d'appui (24) est formée par une surface frontale à arête périphérique plane (22) du corps de base de boîtier (4).

3. Boîtier de transmission selon la revendication 1 ou 2, **caractérisé en ce que** la surface latérale du joint d'étanchéité annulaire (25) tournée vers le corps de base de boîtier (4) est plane dans l'état non comprimé.

4. Boîtier de transmission selon l'une quelconque des revendications précédentes, **caractérisé en ce que** le joint d'étanchéité annulaire (20) chevauche la région d'appui (24) dans la direction de montage (7) dans l'état comprimé.

5. Boîtier de transmission selon l'une quelconque des revendications précédentes, **caractérisé en ce que** le joint d'étanchéité annulaire (20) est réalisé sous forme de profilé filé, notamment avec une surface de section transversale rectangulaire.

6. Boîtier de transmission selon l'une quelconque des revendications précédentes, **caractérisé en ce que** le joint d'étanchéité annulaire (20) est disposé dans une rainure de réception (21) du couvercle de boîtier (3).

7. Boîtier de transmission selon l'une quelconque des revendications précédentes, **caractérisé en ce qu'**au moins une butée (19) est prévue sur le corps de base de boîtier (4) pour supporter le couvercle de boîtier (3).

8. Boîtier de transmission selon la revendication 7, **caractérisé en ce que** chaque pince de retenue (6) est associée à une butée (19).

9. Boîtier de transmission selon l'une quelconque des revendications précédentes, **caractérisé en ce que** les pinces de retenue (6) sont réalisées et/ou disposées de manière à exercer une force de pression sur le côté supérieur du couvercle de boîtier (12) dans la direction du corps de base de boîtier (4).

10. Boîtier de transmission selon l'une quelconque des revendications précédentes, **caractérisé en ce que** les pinces de retenue (6) sont maintenues au moyen d'une ouverture de réception (9) sur des nez d'encliquetage (15) s'étendant dans la direction radiale depuis le corps de base de boîtier (4) avec un biseau entrée (16) tourné dans la direction de montage (7).
